# EUROPEAN PATENT SPECIFICATION

(11) **EP 1 675 746 B1**
(45) Date of publication and mention of the grant of the patent: **18.06.2008**
(21) Application number: 03759129.4
(22) Date of filing: 24.10.2003
(51) Int. Cl.: B60N 2/427

(54) **A SAFETY ARRANGEMENT ASSOCIATED WITH A VEHICLE SEAT**
EINEM FAHRZEUGSITZ ZUGEORDNETE SICHERHEITSANORDNUNG
DISPOSITIF DE SECURITE ASSOCIE A UN SIEGE DE VEHICULE

(43) Date of publication of application: 05.07.2006
(73) Proprietor: AUTOLIV DEVELOPMENT AKTIEBOLAG, 447 83 Vargarda (SE)
(72) Inventor: HAGLUND, Lennart, S-447 32 Vargarda (SE)
(74) Representative: Parry, Simon James
(86) International application number: PCT/SE2003/001645
(87) International publication number: WO 2005/039922

(56) References cited:
- EP-A2- 0 515 204
- WO-A1-00/53452
- GB-B- 2 354 936
- US-A- 3 578 376
- US-A- 5 967 604

## Description

**THE PRESENT INVENTION** relates to a safety arrangement, and more particularly relates to a safety arrangement associated with a vehicle seat.

It has been realised that injuries may be caused to an occupant of a vehicle seat in the event that a rear impact should occur, in other words if another vehicle should collide with the rear part of the vehicle in which the seat is fitted.

In a rear impact of this type, the squab and back-rest of the vehicle seat may accelerate forwardly with a very high acceleration, thus imparting a substantial acceleration to the thighs, buttocks and lower part of the torso of a seat occupant. However, the upper part of the torso and the head of the seat occupant, which ordinarily are not in firm engagement with the seat, will not receive the same acceleration. Thus there is a substantial relative acceleration between the lower part of the body of the seat occupant and the upper part of the body and head of the seat occupant, and this can lead to injuries, particularly injuries of the "whiplash" type.

It has been proposed previously to provide a vehicle seat which, in the event that a rear impact occurs, will tilt rearwardly about a horizontal axis provided beneath the lower part of the back-rest of the seat. It has been found that seats of this type may minimise or obviate injuries in a seat occupant during a rear impact situation.

US-A-3,578,376 discloses a vehicle seat of this type, in which a vehicle seat may be in response to a rear impact, more relative to a stationary member which fixes the seat to the floor. The seat may execute a rearward pivoting action, with energy being absorbed by an energy-absorbing strip. A seat of this type, however, may inadvertently execute the described pivoting action should, for example, a sever force be applied to the seat, such as if a very heavy person should sit awkwardly on the seat. This is clearly undesirable.

DE-A-19756252 discloses another vehicle seat which can execute a rearward pivoting movement in the event that a rear impact should occur.

GB-A-2,330,068 discloses an energy absorbing accessory for use with a vehicle seat which can tilt rearwardly during a rear impact situation.

EP 0515204 A2 discloses a vehicle safety device which responds to a sudden deceleration of a vehicle by controlling movement of both the front and rear of the vehicle seat in forward and upward directions.

WO-A-00/53452, on which the pre-characterising part of claim 1 is based, discloses a vehicle seat having a support in the form of a carriage which is located beneath a sub-frame incorporated into the squab of the seat. The sub-frame is supported on the support towards the rib by means of a lever which is associated with a linkage, which connects the lever to one end of a kinetic energy absorber. The front part of the sub-frame is mounted at a support by means of two interconnecting links, one of these links being connected at the other end of the kinetic energy absorber. The seat, in a rear impact, initially moves rearwardly, with the links pivoting in a rearward sense, and then the seat tilts about a pivot axis defined at the upper end of link. These movements are effected in such a way that energy is absorbed by the kinetic energy absorber.

The present invention seeks to provide an improved safety arrangement.

According to this invention there is provided a safety arrangement having the features set forth in claim 1. The safety arrangement comprises a vehicle seat to be mounted to a sub-frame in a motor vehicle, the vehicle seat being provided with a rear mounting and a forward mounting, the rear mounting being configured to permit a rearward movement of the seat and also a rearward pivoting movement of the seat about a predetermined pivot axis, there being means to resist the said rearward movement of the seat, the forward mounting being configured to permit the rearward movement of part of the seat followed by said rearward pivoting movement, there being an energy-absorbing device to absorb energy at least during the rearward pivoting movement, and a catch to prevent said rearward pivoting movement, the catch being disengageable in response to the rearward movement of part of the seat; the rear mounting means comprises depending lugs, each lug being provided with an elongate inclined slot, inclined downwardly and forwardly to accommodate a fixing stud to fix the lug to the sub-frame for pivotal movement about the axes of the studs, wherein the rear mounting is configured to cause a rear part of the seat to rise during said rearward movement to resist the said rearward movement of the seat.

Further features of the invention are disclosed in the dependent claims.

Advantageously, the means to resist the rearward movement of the part of the seat comprises a resilient element.

Preferably, the resilient element forms part of the forward mounting.

Advantageously, the seat is adjustably mounted on rails, the rails being provided with said mounting means to mount the seat to the vehicle.

Conveniently, the slot is an arcuate slot inclined generally downwardly and generally forwardly.

Advantageously, the catch is disengageable in response to a force in excess of a predetermined force applied to the seat.

Preferably, the predetermined force is the force applied to the seat by a 95 percentile male dummy when accelerated by 5g.

Conveniently, part of the catch is deformable and deforms when subjected to said force in excess of a predetermined force.

In order that the invention may be more readily understood, and so that further features thereof may be appreciated, the invention will now be described by way of example, with reference to the accompanying drawings in which:
FIGURE 1 is an exploded respective view of a safety arrangement in accordance with the invention in the form of a vehicle seat.
FIGURE 2 is an enlarged exploded view of part of the seat of Figure 1,
FIGURE 3 is a view of a component of the seat, part of which is visible in Figure 2,
FIGURE 4 is an underneath view of the housing and energy-absorbing strip of Figure 2,
FIGURE 5 is a partly cut-away view of the housing and energy-absorbing strip of the embodiment shown in Figure 2,
FIGURE 6 is a sectional view taken through the housing and energy-absorbing strip as shown in Figure 2 in a first position,
FIGURE 7 is a sectional view corresponding to Figure 6 showing the illustrated components in a second position,
FIGURE 8 is a sectional view corresponding to Figure 7 showing the components in a third position,
FIGURE 9 is an exploded partly cut-away view of part of the vehicle seat of Figure 1 in an initial condition,
FIGURE 10 is a side view of a rear part of the seat of Figure 1 in an initial condition,
FIGURE 11 is a perspective view corresponding to Figure 9 showing the illustrated components in a second condition,
FIGURE 12 is a view corresponding to Figure 10 showing the components in a second condition,
FIGURE 13 is a view corresponding to Figure 9 showing the illustrated components in a third condition,
FIGURE 14 is a view corresponding to Figure 12 showing the components in a third condition,
FIGURE 15 is a diagrammatic view of the seat of Figure 1 illustrating the seat and a seat occupant after a rear impact has occurred,
FIGURE 16 is a side view of a vehicle seat that is a modified safety arrangement in accordance with the invention,
FIGURE 17 is a partial view of a further vehicle seat which is a modified embodiment of the invention,
FIGURE 18 is a side view of part of a further modified embodiment of the invention in a first position,
FIGURE 19 is a side view corresponding to Figure 18 showing the illustrated components in a second condition,
FIGURE 20 is a view corresponding generally to the view of Figure 4 but illustrating a further vehicle seat which is a modified embodiment of the invention,
FIGURE 21 is a view corresponding generally to Figure 10 but showing a further vehicle seat which is a modified embodiment of the invention, and
FIGURE 22 is a view corresponding to Figures 6 to 8 provided for purposes of explanation.

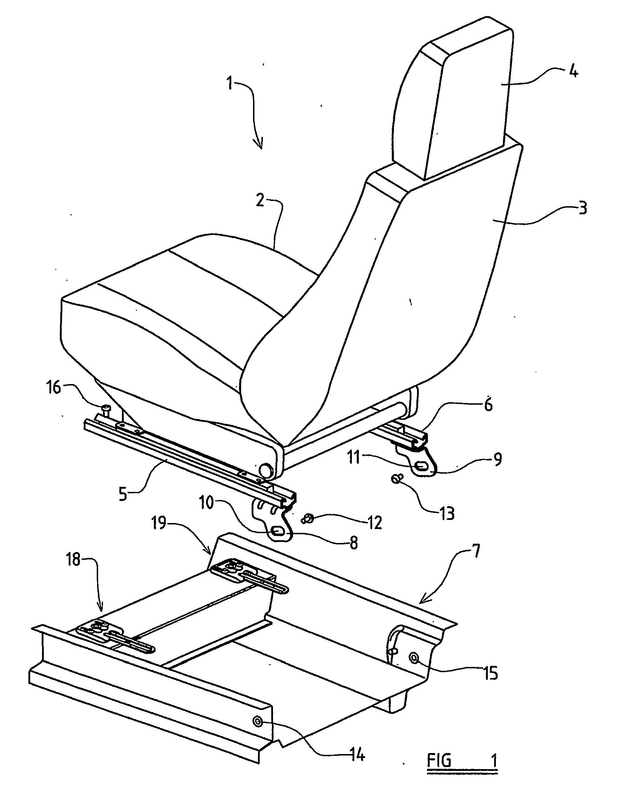

Referring initially to Figure 1 of the accompanying drawings, a vehicle seat 1 is provided with a squab 2, a back-rest 3 and a head-rest 4. The seat is mounted on a pair of parallel rails 5, 6. The seat may slide along the rails and may be selectively locked in position using a conventional locking mechanism.

The rails 5, 6 are mounted on a sub-frame 7, the sub-frame 7 forming part of, or being secured to the chassis of the vehicle. The sub-frame may be any suitable form of underlying support for the rails 5, 6 and the seat 1.

Secured to the rear-most end of each rail 5, 6 is a depending lug 8, 9 formed from an appropriate plate material. Formed within each lug is an elongate slot 10, 11, each slot being inclined upwardly as from the forward-most part of the lug 8, 9 towards the rear-most part of the lug 8, 9.

Respective fixing studs 12, 13 are provided, the fixing stud 12 passing through the slot 10 in the lug 8 and engaging an appropriate mounting aperture 14 formed in the sub-frame 7 and the fixing stud 13 passing through the slot 11 in the lug 9 and engaging a further fixing aperture 15 in the sub-frame 9.

As will become clear from the following description, the rails, together with the seat, may effect a rearward pivoting motion about the axes defined by the mounting studs 12, 13. Also, as will become clear from the following description, the rails 5, 6, together with the seat, may, in certain circumstances, move rearwardly relative to the sub-frame 7. When the rails and seat effect this rearward movement, the lugs 8, 9 will move from an initial position in which the mounting studs 12, 13 are at the upper or rear-most ends of the inclined slots 10, 11 to a position in which the mounting studs 12, 13 are at the forward or lower-most ends of the inclined slots 10, 11. Thus, in effecting this movement, the lugs 8, 9 and also the rear part of the seat will move slightly upwardly due to the inclination of the slots 10, 11.

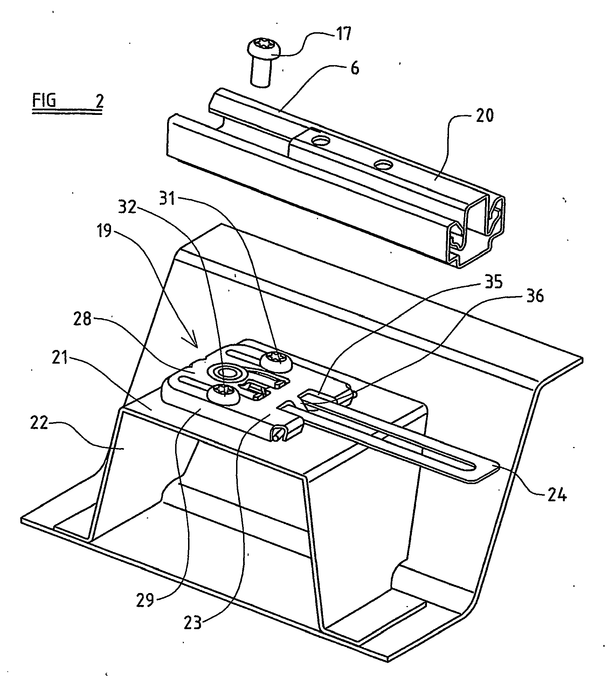

The front part of each rail 5, 6 is connected, by means of a respective connecting bolt 16 (only the connecting bolt 16 for rail 5 is visible in Figure 1 - a corresponding connecting bolt 17 is provided at the forward-most part of rail 6 as seen in Figure 2) to a respective energy-absorbing device 18, 19 mounted on the sub-frame 7.

Turning now to Figure 2, the forward-most part of rail 6 is shown, illustrating, within the rail, part of a carriage 20. The rail 6 and carriage 20 may be of any convenient or conventional design. The carriage may slide along the rail and supports the seat 1 so that the position of the seat may be adjusted.

As can be seen most clearly from Figure 2, the energy-absorbing device 19 is mounted on the upper surface 21 of a hollow transverse strut 22 forming part of the lower frame 7.

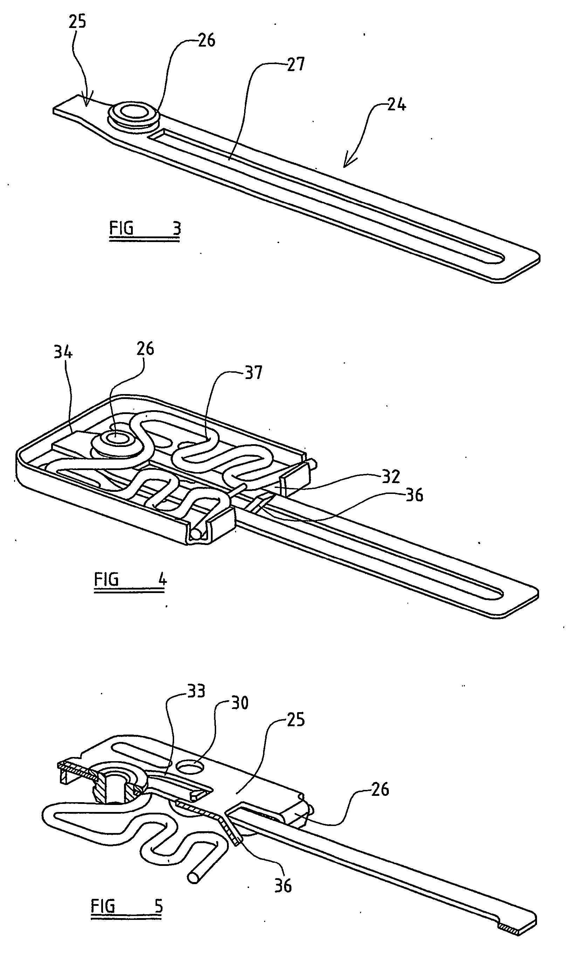

Referring now to Figures 2 to 5, the energy-absorbing device 19 includes a housing 23 and an energy-absorbing strip 24. The energy-absorbing strip 24 (see Figure 3) is formed of an elongate flat strip of deformable metal. At one end, the strip terminates in a planar region 25 having converging sides, with a slightly rounded end. The region 25 is thus of truncated triangular form, and serves to form part of a catch. Mounted on the strip 24 adjacent the region 25 is a mounting bush 26 which is fast with the strip, but which is configured to receive the bolt 17.

The bush 26 is located adjacent one end of a centrally located axially extending slot 27 which extends virtually to the other end of the strip 24.

The housing 23, as can be seen most clearly in Figures 2, 4 and 5, is of generally rectangular form, having an upper wall 28 and a depending side-wall 29. Two apertures, one of which, 30, is visible in Figure 5, are provided in the upper wall 28 to receive fixing bolts 31, 32 which are used to fix the housing to the said upper-most surface 21 of the hollow transverse strut 22, trapping one end of the energy-absorbing element 24 between the upper wall 28 of the housing and the upper wall 21 of the hollow transverse strut 22.

An aperture 33 is provided in the upper wall 28 of the housing, the aperture 30 having a configuration equivalent to the configuration of the truncated triangular end region 25. Thus the aperture 33 has opposed converging side-walls, and a slightly rounded narrower end. As will become clear, the aperture is such that when the end region 25 of the strip 24 is co-aligned with the aperture the end part of the strip may pass through the aperture. In an initial position of the strip 24 the bush 26 is at the slightly rounded narrowest end of the aperture 33. Adjacent the narrowest end of the aperture 33 the base of the side-wall 29 is provided with a retaining aperture 34, and the very end most part of the truncated triangular region 25 of the energy-absorbing strip 24 passes through the said retaining aperture 34. The end part of the energy absorbing strip and the overlying part of the housing thus form a catch. The catch prevents pivotal movement of the seat about the axes of the studs 12, 13.

Opposite the side-wall defining the retaining aperture 34, an exit aperture 35 is defined through which the main part of the energy-absorbing strip 24 exits from the housing. The energy exit aperture 35 is provided with a centrally located depending finger 36 which extends through the central slot 27 provided in the energy-absorbing strip 24.

A serpentine spring 37 is provided within the housing, the spring having portions which engage the side-wall 29 of the housing 23 on either side of the exit slot 35, and a portion which engages part of the bush 26 so as to provide a bias to the energy-absorbing strip 24 biasing the end of the truncated triangular region 25 through the retaining slot 34.

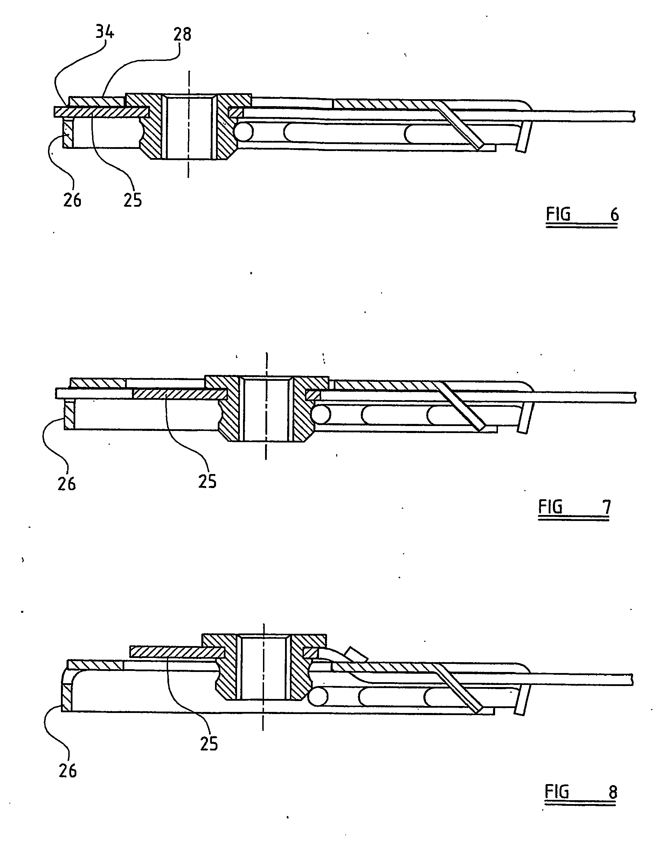

Turning now to Figures 6 to 8, which are sectional views through the energy-absorbing device 19, it can be seen that in an initial condition, in which the end part of the truncated triangular region 25 of the energy-absorbing strip 24 passes through the retaining slot 34 formed in the side-wall 25, if an upward force is applied to the bush, the truncated triangular region 25 of the energy-absorbing strip 24, and the adjacent part of the upper wall 28 and the housing 23, act as a catch to prevent the bush 26 moving upwardly.

However, if a sufficient rearward force is applied to the bush 26 by the rail which is secured to the bush, for example, as a consequence of a rear impact, the bush will move towards the right within the housing, as shown in Figures 6 to 8, against the biasing effect of the spring, and the truncated triangular region 25 of the energy-absorbing strip 24 will then be aligned with the aperture 33 formed in the upper wall 28 of the housing 23.

The bush 26, and the end part 25 of the energy-absorbing strip 24, are thus capable of rising through the aperture 33, since the catch constituted by the truncated triangular region 25 and the initially overlying part of the housing 23 and also the engagement with the retaining slot 34 has now become disconnected or disengaged.

As will become clear from the following paragraphs, the rearward movement of the bush 26, in the described embodiment, is resisted by the spring and is also resisted by the rear mounting of the rails.

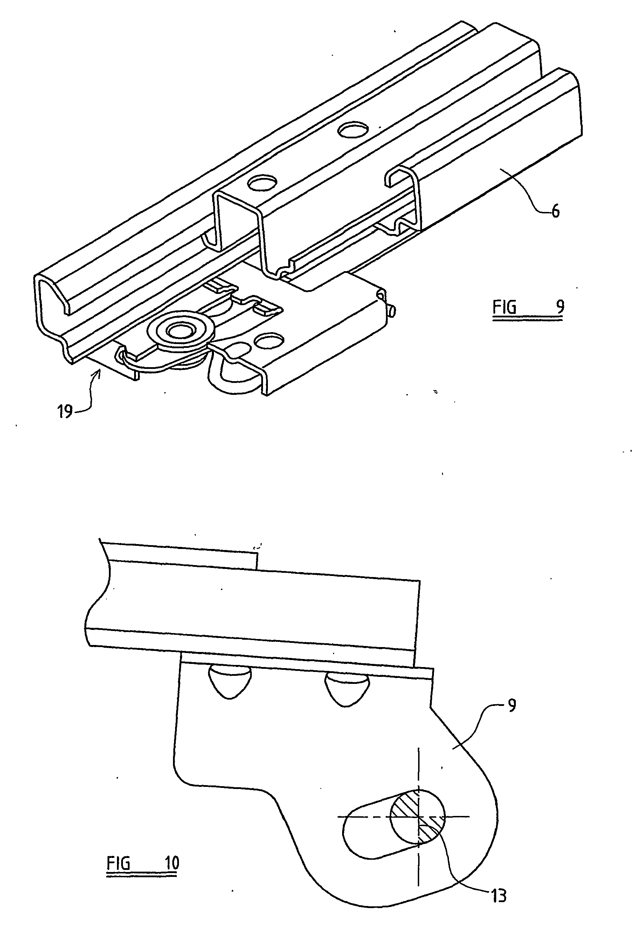

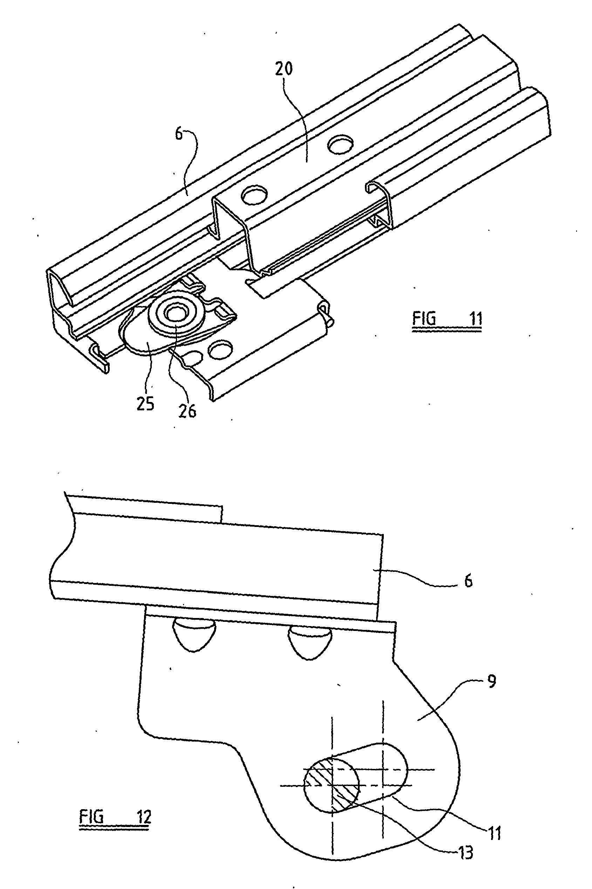

Figures 9 and 10 illustrate, respectively, the energy-absorbing unit 19 and the rear lug 9 as connected to the rail 6 in an initial condition. In the event of a rear impact, a very substantial rearwardly directed force is applied to the vehicle seat, the rail 6 will tend to move rearwardly. As the rail 6 moves rearwardly, the rail moves in such a way that the rear-most lug 9 moves rearwardly and thus rises due to the angle of inclination of the slot 11, with the mounting stud 13 effectively moving from the rear and upper-most end of the slot 11 as shown in Figure 10 to the front and lower-most end of the slot 11 as shown in Figure 12. Energy is absorbed as the seat effects this movement, as the rear part of the seat moves upwardly against the downwardly biasing force of gravity, and thus this movement serves to resist the rearward movement of the rail 6. The rearward movement of the rail is also resisted by the serpentine spring 37.

Nevertheless, if a sufficient force is applied to the rail 6 the rail will move, bringing the illustrated components to the condition illustrated in Figure 12 in which the truncated triangular region 25 of the energy-absorbing strip 24 is aligned with the corresponding shaped aperture 33 formed in the upper wall 28 of the housing 23.

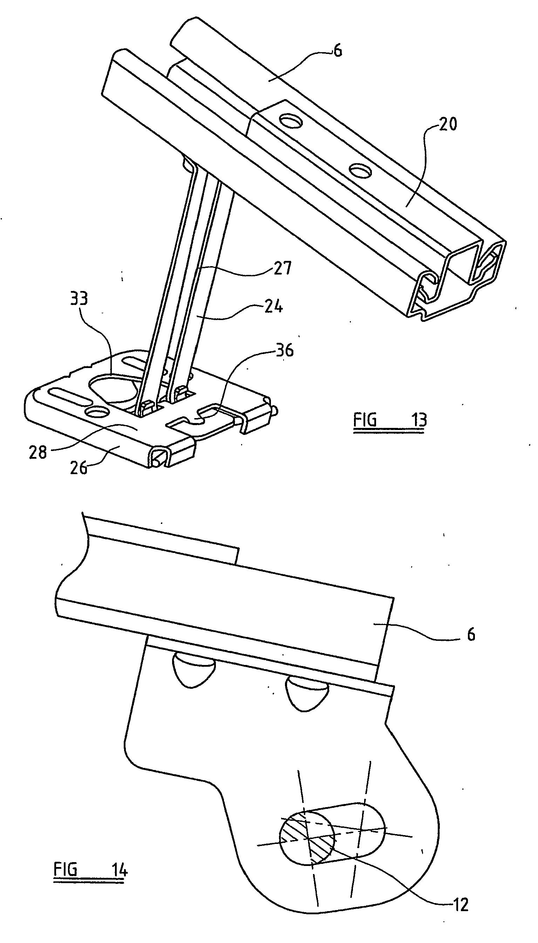

The seat 1 may now pivot rearwardly about the pivot axis defined by the stud 13 and the stud 12. The various illustrated components then achieve the condition shown in Figure 13.

The forward-most part of the rail 6 is moved upwardly, as the rear part of the rail pivots about the axis of the fixing stud 13. As the front part of the rail moves upwardly, so the energy-absorbing strip 24 is drawn through the housing, absorbing energy as the strip is deformed as it leaves the aperture 33 formed in the upper wall 28 of the housing 23. The movement of the energy-absorbing strip 24 continues until the finger 36 provided in the centre of the exit aperture 35 formed in the housing 23 engages the end of the central slot 27 provided within the energy-absorbing strip 24

This rearward tilting motion of the seat, with the absorption of energy, is believed to provide a beneficial effect, especially in a rear impact situation in that it has been found that if a seat executes a movement of this type the risk of injury, such as whiplash injury, to a seat occupant is reduced or minimised.

It is to be understood that should, inadvertently, a substantially rearwardly directed force be applied solely to the upper part of the back-rest of the seat, this force will not be generally sufficient to move the seat rearwardly to such a position that the catch constituted by the truncated triangular region 25 of the energy-absorbing strip 24 and the adjacent part of the housing is released, and thus it is envisaged that the seat will only execute the described slight rearward and subsequent pivoting movement in the event that a rear impact should occur.

Whilst the invention has been described with reference to one embodiment, it is to be appreciated that many modifications may be effected.

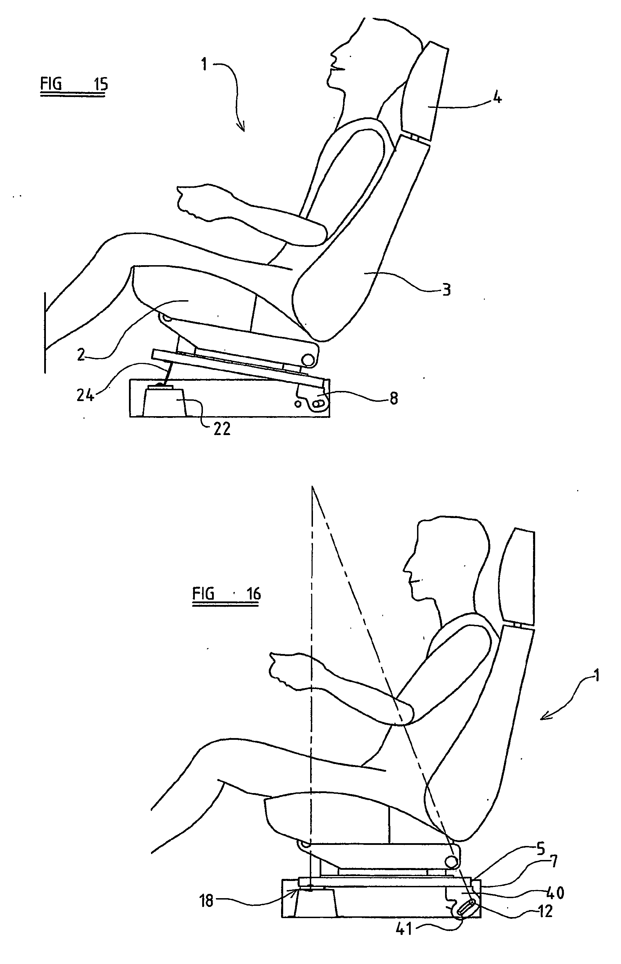

Figure 16 illustrates a modified embodiment of the invention. In this embodiment of the invention a seat 1 is again supported on rails, including a rail 5. The front end of the rail is provided with an energy-absorbing device 18 of the type described above. The rear part of the rail is provided with a depending lug 40 which is secured to the sub-frame by means of a mounting stud 12. The mounting stud 12, however, passes through an arcuate slot 41 which is generally forwardly and downwardly inclined from the mounting stud 12. It is thus to be appreciated that the precise configuration of the slot 41 within the lug is not crucial, although it is preferred that the slot is inclined in such a way that as the rail of the seat moves rearwardly, so the rear part of the rail will rise as, effectively, the stud moves along the slot, since this will tend to resist an inadvertent rearward movement.

Instead of having a depending lug provided at the rear end of the seat rail, the rear part of the seat rail might, in an alternative embodiment, be connected to the sub-frame 7 by means of a pivotal link 50. The pivotal link 50 may have its lower end pivotally connected 51 to the sub-frame 7 and its upper end 52 pivotally connected to the rear part of the rail 6. A frangible pin, such as the pin 53 may pass through part of the link and through part of the sub-frame 7, the frangible pin 53 only breaking, to permit the desired rearward movement of the rail 5, when subjected to a very severe force, such a force likely to arise in a rear impact situation. Thus, in an embodiment of this type, especially where the link 50 has an initial position in which it is inclined forwardly, the rearward movement of the rail is resisted not only by the fact that the pivotal connection 52 must rise as the link 50 executes a movement rearwardly from its initial position, but also by the fact that the link 50 must break the frangible pin 53 before the link can move rearwardly.

In Figure 16 lines of force exerted in the seat anchorages during a rear impact as shown in phantom.

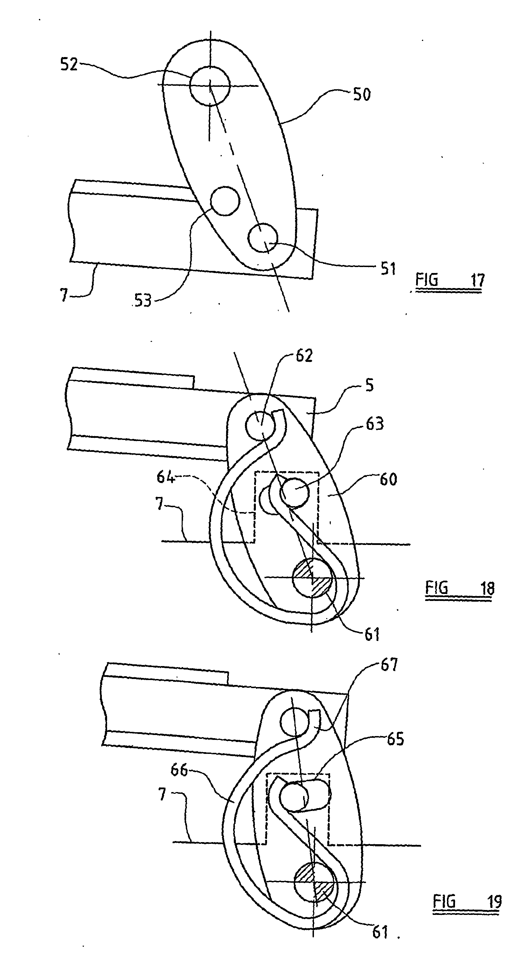

Figures 18 and 19 illustrate a further form of pivotal link. In this embodiment a link 60 is pivoted, at its lower end, about a pivot axis 61 to part of the sub-frame 7. The upper end of the link 60 is pivoted, about a pivot axis 62, to the rear part of the rail 5. A spring retaining pin 63 is carried by a lug 64 which extends upwardly from part of the sub-frame 7, the retaining pin 63 passing through an arcuate slot 65 formed in a central part of the link 60. A sinuous spring 66 has one end 67 engaging the upper-most pivot 62, and a lower end which surrounds the lower-most pivot 61 to engage the retaining pin 63. The link 60 is initially inclined forwardly. In the event that a very substantial rearward force is applied to the rail 5, the rail 5 may move rearwardly, this movement causing the link 60 to move in such a way that the pivot 62 initially moves upwardly, so that the effect of the weight of the seat and the weight of the seat occupant will resist the initial rearward movement of the rail. The rearward movement of the rail also causes the spring 66 to become compressed, so that the spring also resists the rearward movement of the rail.

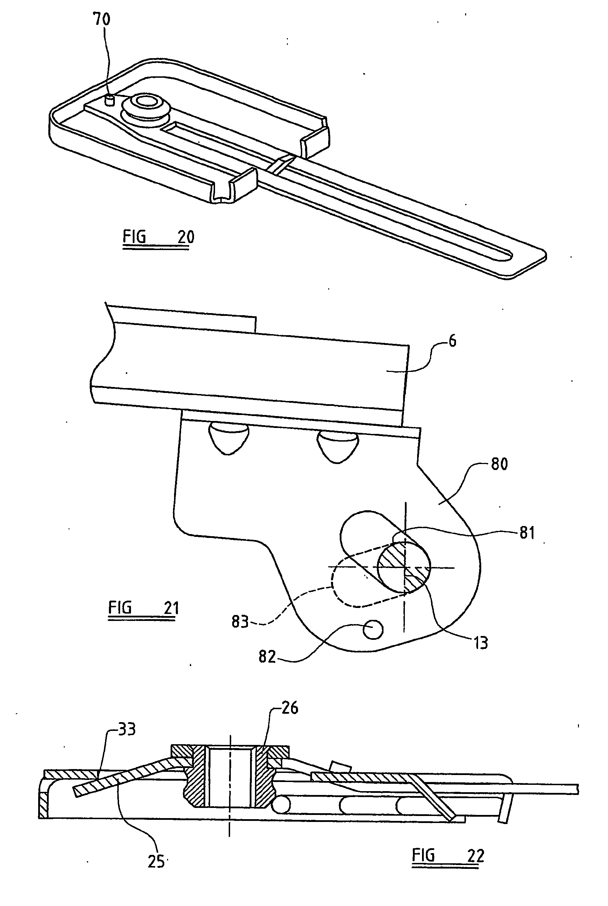

Figure 20 illustrates a modified form of energy-absorbing device in which most of the components are as described with reference to Figures 1 to 5. The same reference numerals are used to indicate the same components which are not re-described. In this embodiment of the invention it is to be noted that the spring present in the housing of the embodiment of Figures 2 to 5 has been omitted. Instead a frangible pin 70 is provided which engages the truncated triangular region 25 of the energy-absorbing strip 24 and serves to secure that region of the energy-absorbing strip to the housing 23. It is to be appreciated, therefore, that before the energy-absorbing strip may move, relative to the housing, in such a way that the truncated triangular region 25 becomes co-aligned with the correspondingly shaped aperture 33 formed in the upper wall 28 of the housing 23, the frangible pin 70 must be broken. Thus, with an energy-absorbing device as illustrated in Figure 20 a sufficient force must be applied to the seat to break the frangible pin before the energy-absorbing device may operate to permit the seat to tilt rearwardly.

Figure 21 illustrates a rear mounting for a rail, such as the rail 6, the rear mounting incorporating a depending lug 80 which corresponds generally with the lug 9 as shown in Figure 10. The lug 80 is provided with a forwardly and upwardly inclined slot 81, and a mounting stud 13 passes through the lower and rear-most end of the slot 81. A frangible pin 82 is provided which passes through part of the lug and engages the sub-frame 7. It is to be appreciated that, for the vehicle seat to move rearwardly, the frangible pin must initially be broken by the application of a sufficient force. However, when the frangible pin has been broken the rear part of the rail will move rearwardly relatively easily since, during this movement, the rear part of the rail will actually fall slightly, the rearward movement thus being assisted by the effect of the weight of the seat and the seat occupant instead of being hindered. Of course, in this embodiment, the slot 81 could be positioned to be inclined forwardly and downwardly, as shown in phantom, 83, should it be desirable for the rearward movement of the seat to be further resisted.

It is to be appreciated that in the foregoing embodiments of the invention, should the vehicle seat only be provided with a modest rearwardly directed force, such as may be caused by a heavy person awkwardly sitting on the seat, the catch provided at the forward-most end of each rail will not be released and thus the seat will not be capable of effecting the described rearward pivoting motion about the horizontal axes defined by the mounting studs 12, 13. However, in a rear impact situation the seat will be able to move rearwardly against the resistance provided by, in the various embodiments, the spring, the inclination of the slots and the frangible pins. When the seat moves rearwardly the catch is released and the seat may then pivot rearwardly.

Whilst the invention has been described as operating with the seat moving rearwardly when the vehicle in which the seat is mounted is subjected to a rear impact, it is possible that such a rearward movement may not be generated, especially if the occupant of the seat has an extremely high centre of gravity.

Figure 16 shows in phantom force lines passing through the anchorages for the seat. The force line associated with the front anchorage is vertical and the force line associated with the rear anchorage is inclined, and the force lines intersect.

Should a force be applied to the back-rest above the level at which the force lines cross, there is a possibility that the seat will tend to pivot, rather than move rearwardly.

In order to ensure that protection is provided for a seat occupant who is of such a build that a force is applied to the seat, in a rear impact, tending to tilt the seat rather than move the seat rearwardly, it is preferred for the catch to be designed so that the catch becomes released if the seat is subjected to a very large force, even if the seat does not move rearwardly to release the catch in the manner described above.

Thus, in the preferred embodiment, the catch is configured so that an element of the catch will deform when the seat is subjected to a force in excess of a predetermined force, the predetermined force being, for example, the force that would be applied to the seat by a 95 percentile male dummy on the seat when subjected to an acceleration of 5g.

Referring to Figure 22, it is preferred that the truncated triangular end region 25 of the deformable strip 24 should be so configured that the end region 25 will deform to permit the bush 26 to rise upwardly through the aperture 33 formed in the upper wall 28 of the housing when the vehicle seat is subjected to the said force.

It is to be appreciated that, as the bush 26 begins to move upwardly through the aperture 33, energy will be absorbed as the truncated triangular region 25 of the energy-absorbing strip 24 is deformed. The deformation of the triangular region 25 will continue to such an extent that the bush 26 becomes totally separated from the aperture 33, and the energy-absorbing strip may then be withdrawn through the aperture 33, with a consequent rearward pivoting of the seat, in the manner described above.

It will thus be appreciated that if the seat is occupied by a seat occupant of such a weight or size that, in a rear impact, the seat is not moved rearwardly, but tends immediately to pivot, nevertheless the described arrangement will provide protection for the seat occupant.

In the present specification "comprises" means "includes or consists of" and "comprising" means "including or consisting of".

## Claims

1. A safety arrangement, the safety arrangement comprising a vehicle seat (1) to be mounted to a sub-frame (7) in a motor vehicle, the vehicle seat (1) being provided with a rear mounting and a forward mounting, the rear mounting being configured to permit a rearward movement of the seat (1) and also a rearward pivoting movement of the seat (1) about a predetermined pivot axis, there being means to resist the said rearward movement of the seat (1), the forward mounting being configured to permit the rearward movement of part of the seat (1) followed by said rearward pivoting movement, there being an energy-absorbing device (19) to absorb energy at least during the rearward pivoting movement, and a catch (25) to prevent said rearward pivoting movement, the catch (25) being disengageable in response to the rearward movement of part of the seat (1) **characterised by** the rear mounting means comprising depending lugs (8,9), each lug (8,9) being provided with an elongate slot (11), inclined downwardly and forwardly to accommodate a fixing stud (12,13) to fix the lug (8,9) to the sub-frame (7) for rearward pivotal movement about the axis of the studs (12,13), wherein the rear mounting is configured to cause a rear part of the seat (1) to rise during said rearward movement to resist the said rearward movement of the seat (1).

2. A safety arrangement according to claim 1 wherein the means to resist the rearward movement of the part of the seat (1) comprise a resilient element (37).

3. A safety arrangement according to claim 2 wherein the resilient element (37) forms part of the forward mounting.

4. A safety arrangement according to any one of the preceding claims wherein the seat (1) is adjustably mounted on rails (5,6), the rails (5,6) being provided with said mounting means to mount the seat (1) to the vehicle.

5. A safety device according to claim 1 wherein the slot (11) is an arcuate slot (11) inclined generally downwardly and generally forwardly.

6. A safety device according to any one of the preceding claims wherein the catch (25) is disengageable in response to a force in excess of a predetermined force applied to the seat.

7. A device according to claim 6 wherein the predetermined force is the force applied to the seat by a 95 percentile male dummy when accelerated by 5g.

8. A safety device according to claim 6 or 7 wherein part of the catch (25) is deformable and deforms when subjected to said force in excess of a predetermined force.

## Patentansprüche

1. Sicherheitsanordnung, wobei die Sicherheitsanordnung einen Fahrzeugsitz (1) umfasst, der an einem Hilfsrahmen (7) in einem Motorfahrzeug zu befestigen ist, wobei der Fahrzeugsitz (1) mit einer hinteren Befestigung und einer vorderen Befestigung bereitgestellt ist, wobei die hintere Befestigung konfiguriert ist, um eine Rückwärtsbewegung des Fahrzeugsitzes (1) und auch eine Rückwärtsschwenkbewegung des Sitzes (1) um eine vorgegebene Schwenkachse zu ermöglichen, wobei Mittel vorhanden sind, um der Rückwärtsbewegung des Sitzes (1) entgegenzuwirken, wobei die vordere Befestigung konfiguriert ist, um die Rückwärtsbewegung eines Teils des Sitzes (1) gefolgt von der Rückwärtsschwenkbewegung zu ermöglichen, wobei eine Energie absorbierende Vorrichtung (19) zum Absorbieren von Energie mindestens während der Rückwärtsschwenkbewegung und ein Riegel (25) zum Verhindern der Rückwärtsschwenkbewegung vorhanden sind, wobei der Riegel (25) als Reaktion auf die Rückwärtsbewegung des Teils des Sitzes (1) gelöst werden kann, **dadurch gekennzeichnet, dass** die hinteren Befestigungsmittel abhängige Laschen (8, 9) umfassen, wobei jede Lasche (8, 9) mit einem länglichen Schlitz (11) bereitgestellt ist, der nach unten und nach vorne geneigt ist, um einen Befestigungsbolzen (12, 13) aufzunehmen, um die Lasche (8, 9) an dem Hilfsrahmen (7) für eine Rückwärtsschwenkbewegung um die Achse der Bolzen (12, 13) zu befestigen, wobei die hintere Befestigung konfiguriert ist, um zu bewirken, dass sich ein hinterer Teil des Sitzes (1) während der Rückwärtsbewegung anhebt, um der Rückwärtsbewegung des Sitzes (1) entgegenzuwirken.

2. Sicherheitsanordnung nach Anspruch 1, wobei die Mittel zum Entgegenwirken der Rückwärtsbewegung des Teils des Sitzes (1) ein elastisches Element (37) umfassen.

3. Sicherheitsanordnung nach Anspruch 2, wobei das elastische Element (37) Teil der vorderen Befestigung ist.

4. Sicherheitsanordnung nach einem der vorhergehenden Ansprüche, wobei der Sitz auf Schienen (5, 6) verstellbar befestigt ist, wobei die Schienen (5, 6) mit den Befestigungsmitteln zum Befestigen des Sitzes (1) an dem Fahrzeug bereitgestellt sind.

5. Sicherheitsvorrichtung nach Anspruch 1, wobei der Schlitz (11) ein bogenförmiger Schlitz (11) ist, der im Allgemeinen nach unten und im Allgemeinen nach vorne geneigt ist.

6. Sicherheitsvorrichtung nach einem der vorhergehenden Ansprüche, wobei der Riegel (25) als Reaktion auf eine übermäßige Kraft einer vorgegebenen Kraft, die auf den Sitz angewendet wird, gelöst werden kann.

7. Vorrichtung nach Anspruch 6, wobei die vorgegebene Kraft die Kraft ist, die auf den Sitz bei einer Beschleunigung von 5 g von einer männlichen 95%-Perzentil-Testpuppe angewendet wird.

8. Sicherheitsvorrichtung nach Anspruch 6 oder 7, wobei ein Teil des Riegels (25) vorformbar ist und sich verformt, wenn er der übermäßigen Kraft einer vorgegebenen Kraft ausgesetzt wird.

## Revendications

1. Dispositif de sécurité, le dispositif de sécurité comprenant un siège de véhicule (1) à monter sur un faux cadre (7) dans un véhicule automobile, le siège de véhicule (1) étant muni d'un support arrière et d'un support avant, le support arrière étant configuré pour permettre un mouvement vers l'arrière du siège (1) et aussi un mouvement de pivotement vers l'arrière du siège (1) autour d'un axe de pivotement prédéterminé, des moyens de résistance au dit mouvement arrière du siège (1) étant présents, le support avant étant configuré pour permettre le mouvement vers l'arrière d'une partie du siège (1) suivi dudit mouvement de pivotement vers l'arrière, un dispositif amortisseur (19) étant présent pour absorber l'énergie au moins pendant le mouvement de pivotement vers l'arrière, ainsi qu'un cliquet (25) pour empêcher ledit mouvement de pivotement vers l'arrière, le cliquet (25) étant libérable en réaction au mouvement vers l'arrière d'une partie du siège (1), **caractérisé en ce que** les moyens de support arrière comprennent des oreilles dépendantes (8, 9), chaque oreille (8, 9) étant munie d'une fente allongée (11) inclinée vers le bas et vers l'avant pour loger un goujon de fixation (12, 13) pour fixer l'oreille (8, 9) au faux cadre (7) pour un mouvement de pivotement vers l'arrière autour de l'axe des goujons (12, 13), dans lequel le support arrière est configuré pour entraîner le soulèvement d'une partie arrière du siège (1) pendant ledit mouvement vers l'arrière, pour résister au dit mouvement vers l'arrière du siège (1).

2. Dispositif de sécurité selon la revendication 1, dans lequel les moyens de résistance au mouvement vers l'arrière de la partie du siège (1) comprennent un élément élastique (37).

3. Dispositif de sécurité selon la revendication 2, dans lequel l'élément élastique (37) fait partie du support avant.

4. Dispositif de sécurité selon l'une quelconque des revendications précédentes, dans lequel le siège (1) est monté de manière ajustable sur des rails (5, 6), les rails (5, 6) étant munis desdits moyens de support pour monter le siège (1) sur le véhicule.

5. Dispositif de sécurité selon la revendication 1, dans lequel la fente (11) est une fente arquée (11) inclinée généralement vers le bas et généralement vers l'avant.

6. Dispositif de sécurité selon l'une quelconque des revendications précédentes, dans lequel le cliquet (25) est libérable en réaction à une force supérieure à une force prédéterminée appliquée au siège.

7. Dispositif selon la revendication 6, dans lequel la force prédéterminée est la force appliquée au siège par un mannequin anthropomorphe mâle du 95^{e} percentile lorsqu'il est accéléré de 5 g.

8. Dispositif de sécurité selon la revendication 6 ou 7, dans lequel une partie du cliquet (25) est déformable et se déforme lorsqu'elle est soumise à ladite force supérieure à une force prédéterminée.
